# EUROPEAN PATENT APPLICATION

(11) **EP 1 698 394 A2**
(43) Date of publication of application: **06.09.2006**
(21) Application number: 06250685.2
(22) Date of filing: 09.02.2006
(51) Int. Cl.: B01J 20/00

(54) **Deactivated surfaces for chromatographic separations and methods of making and using the same**

(30) Priority: 10.02.2005 US 54901
(71) Applicant: Agilent Technologies, Inc., Palo Alto, CA 94306 (US)
(72) Inventor: Lautamo, Roy M.A., Loveland, CO 80537-0599 (US)
(74) Representative: Tollett, Ian

(57) **Abstract**

Disclosed are deactivated surfaces for use in chromatographic separations, such as capillary gas chromatography, comprising a surface material coated with a deactivating polymer comprising high surface energy-generating groups and groups for end-capping reactive silanols. Also disclosed are columns comprising such surfaces, methods of making and using the surfaces, and kits for facilitating the same.

## Description

This invention relates to deactivated surfaces for chromatographic separations and methods of making and using the same.

Gas chromatography is a technique for fractionating and determining the relative amounts of various components in a sample containing a mixture of components of differing volatilities. Generally, a sample is vaporized and the resulting gases are passed through an analytical chromatography column and separated components are detected. To increase separation efficiency and increase sensitivity, chromatography is often performed using capillary columns comprising a chromatographically active stationary phase. The chemistry of the stationary phase is designed to cause different types of molecules to pass through a column at different times and under different conditions, resulting in the separation of molecules as a complex sample passes through the column.

A separation technique relying on capillary columns is capillary gas chromatography (GC). Capillary GC is a separation technique in which the vapor phase of a sample in a gaseous, mobile phase passes through a capillary tube whose inner walls contain a thin film of an adsorbing or absorbing medium serving as the stationary phase. Because of differential interactions of the sample components with the stationary phase, the individual components of the sample move through the column at different rates, resulting in the separation of components into individual zones, moving through the column at velocities characteristic of their molecular natures. The separated components are detected instrumentally as they are eluted from the column.

Open tubular columns were introduced by Golay, et al., (in Coates, V. J.; Noebels, H. J.; Faberson I. S. (eds.), *Gas Chromatography* (1957 *Lansing Symposium),* Academic Press, New York, 1958, pp. 1-013) and are generally small diameter columns in which either the inner tube wall, or an active solid held stationary on the tube wall, acts as the stationary phase, while the lumen of the tube provides an open, unrestricted path for the mobile phase. Regardless of capillary composition (most frequently soft or borosilicate glass, or fused silica) being used in such columns, elimination of surface active sites on the interior surface of the capillary that is in contact with sample is fundamentally important if maximum efficiency in separation and minimal sample loss is to be achieved. Preparation of such columns requires surface deactivation, which is especially important for the GC separation of polar compounds that tend to undergo adsorptive interactions such as with the silanol groups on fused silica capillary inner walls.. Various techniques have been used to chemically deactivate the surface silanol groups, such as the introduction of high temperature persilylation to endcap reactive silanols (Welch, et al., 1977, *Chromatographia* 1977, 10, 22), the use of cyclicsiloxanes and silazanes (Blomberg, et al*, J. High Resolut. Chromatogr. Chromatogr. Commun.* 1980, 3, 527); and the use of polymethylhydrosiloxanes (Wooley, at al., *J. High Resolut. Chromatogr. Chromatogr. Commun.*1984, 7, 329-332).

Effectiveness of these deactivation procedures greatly depends on the chemical structure and composition of the surface to which they are applied. If the active sites on the surface of the column are not eliminated, the chromatographic analyte reacts with the active sites and distorts or even invalidates the results of the chromatography. In this respect, the prior art has only been partly successful in developing satisfactory deactivation procedures, and the procedures that have been developed are often narrowly limited in success. For example, high temperature (>320°C) silylation surface deactivation is difficult to control and high *temperature* tends to damage the capillary. Deactivation with polymethylhydrosiloxanes through the condensation of the silyl hydride groups with surface silanols on fused silica surfaces produces inert surfaces at relatively low temperatures (<320°C) that do not compromise the integrity of the polyimide outer cladding that is used to coat typical fused silica capillaries. However, although excellent surface inertness can be achieved, the low surface energy generated reduces the wettability for most, if not all, conventional stationary phases used for capillary GC columns. This reduces the uniformity and smoothness of the stationary phase layer when coated on these surfaces, substantially reducing the separation efficiency of such columns.

According to a first aspect of the present invention, there is provided a deactivated surface as specified in claim 1.

According to a second aspect of the present invention, there is provided a device as specified in claim 7.

According to a third aspect of the present invention, there is provided a method for generating a deactivated surface as specified in claim 10.

According to a fourth aspect of the present invention, there is provided a method of using a deactivated surface as specified in claim 15.

According to a fifth aspect of the present invention, there is provided a kit as specified in claim 18.

According to a sixth aspect of the present invention, there is provided a system as specified in claim 22.

In one embodiment, the invention provides deactivated surfaces (e.g., columns or channels) for use in chromatographic separation techniques. The deactivated surfaces comprise an inner surface material (e.g., such as glass or fused silica) coated with a polymer layer ("deactivation polymer") that sterically hinders interactions between components in a sample coming in contact with the polymer layer and reactive silanols present on the inner surface. In one aspect, the deactivation polymer reacts with a substantial number of surface silanols through condensation of silanols with silyl hydride groups. In another aspect, the deactivated surface material comprises one or more of the following properties: low reactivity with sample components, thermal stability at temperatures greater than 320 °C, long column life, and high surface energy, producing good wettability. In a further aspect, the deactivation polymer comprises polyalkylhydrosiloxanes.

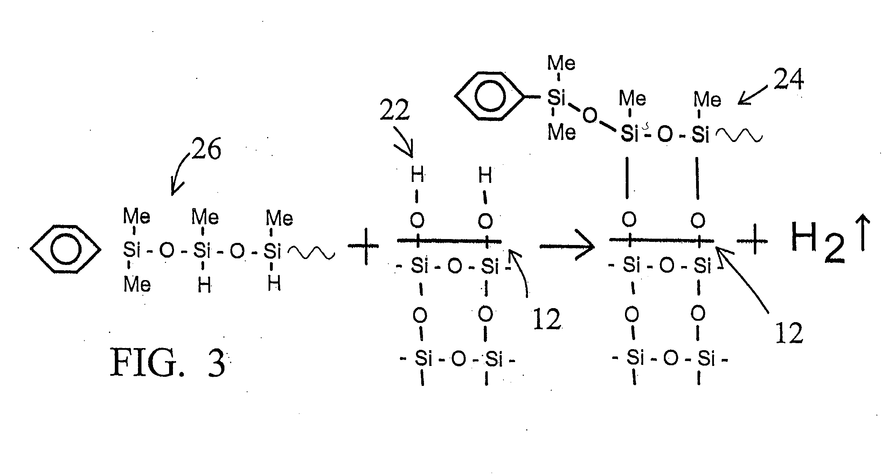

In one embodiment, the deactivation polymer comprises high surface energy-generating groups. In one aspect, the polymer is end-capped with high surface energy-generating groups. Exemplary groups include, but are not limited to phenyl, biphenyl, tolyl, trifluoropropyl, pentafluorophenyl, cyanopropyl, cyanoethyl, short chains of polyethylene glycol groups, as well as substituted aromatic groups (methoxy or other alkoxy-substituted aromatic groups as well as singly, or multiply cyano-substituted aromatic groups). The polymer may comprise one or more of these groups and/or combinations of these groups. In one aspect, the deactivation polymer comprises a polymer as shown in Figure 3.

In a further aspect, the polymer comprises groups that are capable of reacting with silanols on the column surface to end-cap the silanols. For example, in one aspect, the polymer comprises hydride groups such as -Si-H groups that may form a stable siloxane (-Si-O-Si-) bond with the surface as to produce a layer of polysilylhydride on the surface.

In another embodiment, the invention provides capillary columns comprising inner deactivated surfaces.

In certain aspects, the columns may be used as wall-coated open-tubular columns or WCOTs in chromatographic separation techniques, such as gas chromatography.

In another embodiment, the invention provides a method of preparing the surfaces described above. In one aspect, a method according to the invention comprises providing a glass column material, the inner surface of which is etched and acid-activated, or fused silica capillary tubes, the inner surface of which is acid-activated, by preparing a siloxane, such as a polyalkylhydrosiloxane, having a high surface energy group, and then contacting the acid-activated and/or etched surface with the siloxane comprising the high surface energy-generating group under conditions sufficient to bond the high surface energy-generating group-containing siloxane to the surface, thereby forming a deactivating polymer-coated surface or deactivated surface. In one aspect, the polymer is capped at its terminal end with a high surface energy group. In still another aspect, after appropriate flushing and drying steps, the deactivating polymer-coated surface is then coated with a film comprising a polar liquid polymer that may act as a stationary phase in chromatographic separation techniques. In still a further aspect, the deactivating polymer coating and/or the polar liquid polymer coating comprises a substantially uniform thickness between about 0.1 to 10 microns.

In a further embodiment, the invention provides a method of using a deactivated surface as described above to separate molecules in a sample. The method comprises providing a deactivated surface coated with a stationary phase, flowing a sample comprising a plurality of molecules past the stationary phase-coated surface with a sample, detecting and/or collecting molecules that have flowed past the surface. In one aspect, the deactivated surface is the inner surface of a capillary column. In another aspect, sample is contained within a vapor phase.

In still a further embodiment, the invention provides kits for making and using deactivated surfaces as described above. In one aspect, the kit comprises a surface comprising one or more silanol groups (such as a glass or fused silica capillary column) and a deactivating polymer composition. In another aspect, the kit additionally comprises a composition for forming a stationary phase.

The objects and features of preferred embodiments of the invention can be better understood with reference to the following detailed description, provided by way of example only, and accompanying drawings. The Figures shown herein are not necessarily drawn to scale, with some components and features being exaggerated for clarity.
FIG. 1 is a sectional view of a glass or silica capillary with internal polymer layers, and embodying the principles of the present invention.
FIG. 2 is a chemical reaction diagram of a prior art method for deactivating the internal surface of a glass or silica capillary.
FIG. 3 illustrates a chemical reaction used in a method for deactivating the internal surface of a glass or silica capillary, using a terminal capping group according to one aspect of the invention
FIG. 4 illustrates a chemical reaction used in a prior art method for deactivating the internal surface of a glass or silica capillary, using a pendant capping group.
FIG. 5 illustrates a chromatogram developed using the chromatography column capillary of the prior art method represented in FIG. 2,
FIG. 6 illustrates a chromatogram developed using the improved chromatography column capillary of the invention represented in FIG. 3; and
FIG. 7 illustrates a chromatogram developed using the chromatography column capillary based on the prior art method represented in FIG. 4.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, the preferred methods and materials are now described. All publications mentioned herein are incorporated herein by reference to disclose and describe the methods and/or materials in connection with which the publications are cited. The citation of any publication is for its disclosure prior to the filing date and should not be construed as an admission that the present invention is not entitled to antedate such publication by virtue of prior invention. Further, the dates of publication provided may be different from the actual publication dates that may need to be independently confirmed.

It must be noted that as used herein and in the appended claims, the singular forms "a", "an", and "the" include plural referents unless the context clearly dictates otherwise.
"May" refers to optionally.
"About" modifying, for example, the quantity of an ingredient in a composition, concentrations, volumes, process temperature, process time, yields, flow rates, pressures, and like values, and ranges thereof, employed in describing the embodiments of the disclosure, refers to variation in the numerical quantity that can occur, for example, through typical measuring and handling procedures used for making compounds, compositions, concentrates or use formulations; through inadvertent error in these procedures; through differences in the manufacture, source, or purity of starting materials or ingredients used to carry out the methods; and like proximate considerations. The term "about" also encompasses amounts that differ due to aging of a formulation with a particular initial concentration or mixture, and amounts that differ due to mixing or processing a formulation with a particular initial concentration or mixture. Whether modified by the term "about" the claims appended hereto include equivalents to these quantities.

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention.

When two or more items (for example, elements or processes) are referenced by an alternative "or", this indicates that either could be present separately or any combination of them could be present together except where the presence of one necessarily excludes the other or others.
"Consisting essentially of' in embodiments refers, for example, to a single compound, mixture of compounds, or a composition, the method of using the compound or compounds to deactivate capillary columns, and the resulting deactivated capillary column articles of the disclosure, and can include the components or steps listed in the claim, plus other components or steps that do not materially affect the basic and novel properties of the compounds, articles, and methods of use of the disclosure, such as the particular substrates, particular column pretreatments, or like structure or process variables selected. Items that may materially affect the basic properties of the components or steps of disclosure may impart undesirable characteristics to the present disclosure include, for example, decreased separation, decreased resolution, increased tailing, and like characteristics. In embodiments, the compounds, the articles, or the methods of the present disclosure preferably eliminate or avoid such undesirable characteristics.

The following definitions are provided for specific terms, which are used in the following written description.
"Fused silica" and like terms refer to silica (SiO₂) which has been, for example, heated at high temperature and pressure to provide a product comprised predominantly of a bulk network of repeating (Si-O-) bonds and having surface silanol groups (Si-OH) which are reactive. For additional definitions, descriptions, and methods of silica materials, see for example, R.K. Iler, *The Chemistry of Silica, Wiley-Interscience,* 1979, the entirety of which is incorporated by reference herein.
"Capillary column" or "capillary channel" includes any tube-like passage and are generally used interchangeably. In certain aspects, capillary columns are fabricated from materials which have on their surface reactive silanol groups (Si-OH) or like reactive groups, such as Si-X where X is a substitutable, displaceable (leaving group), or blockable group, such as -OH, and like groups. One possible example of a capillary column can include a small diameter tubing, such as fused silica glass, nanotubes, microtubes, vias on or within silicon wafers, having reactive silanol groups (Si-OH), or like reactive groups on an enclosed surface which can be deactivated using the compounds and methods of the disclosure. Another possible example of a capillary column, can include, for example, stainless steel tubing that has been treated with silane gas to form a silicon layer on the inside surface. The resulting silicon layer readily oxidizes to from a surface layer of silica (SiO₂) having reactive silanol groups (Si-OH).

As used herein, the term "deactivated surface" refers to a treated surface which is inactive or less reactive with particular components in a sample mobile phase passing through a column and exposed to such a surface as compared to an untreated surface comprising reactive silanol groups. In one aspect, a "deactivated surface" according to the invention is at least about 2-fold less reactive than an untreated surface as measured by, for example, reduced or eliminated tailing and/or increased resolution of separated sample components of similar molecular characteristics. In another aspect, deactivation is assayed by measuring linearity of response for active compounds down to lower detection levels.

A "stationary phase" and like terms refer to the material to be coated on the deactivated surface. In general, a stationary phase refers to any adsorptive or absorbtive material (e.g., deposited in a column) over which a mobile phase flows.
"Alkyl" includes linear alkyls, branched alkyls, and cycloalkyls.
"Substituted alkyl" or "optionally substituted alkyl "refers to an alkyl substituent, which includes linear alkyls, branched alkyls, and cycloalkyls, having from 1 to 4 optional substituents selected from hydroxyl (-OH), halogen, amino (-NH₂), nitro (-NO₂), alkyl, acyl (-C(=O)R), alkylsulfonyl (-S(=O)₂R) or alkoxy (-OR). For example, an alkoxy substituted alkyl, can be a 2-methoxy substituted ethyl of the formula -CH₂-CH₂-O-CH₃, a 1-dialkylamino substituted ethyl of the formula-CH₂(NR₂)-CH₃, and like substituted alkyl substituents.

The carbon atom content of various hydrocarbon-containing moieties is indicated by a prefix designating a lower and upper number of carbon atoms in the moiety, i.e., the prefix Cᵢ₋ⱼ indicates a moiety of the integer "i" to the integer "j" carbon atoms, inclusive. Thus, for example, (C₁-C₇)alkyl or C₁₋₇alkyl refers to alkyl of one to seven carbon atoms, inclusive, and (C₁-C₄)alkyl or C₁₋₄alkyl refers to alkyl of one to four carbon atoms, inclusive.

Specifically, C₁₋₄alkyl can be methyl, ethyl, propyl, isopropyl, butyl, iso-butyl, sec-butyl, *tert*-butyl; C₁₋₇alkyl can be methyl, ethyl, propyl, isopropyl, butyl, iso-butyl, sec-butyl, *tert-*butyl, pentyl, 3-pentyl, hexyl, or heptyl; (C₃₋₁₂)cycloalkyl can be cyclopropyl, cyclobutyl, cyclopentyl, cyclohexyl, cycloheptyl, cyclooctyl, bicyclic, or multi-cyclic substituents, such as of the formulas

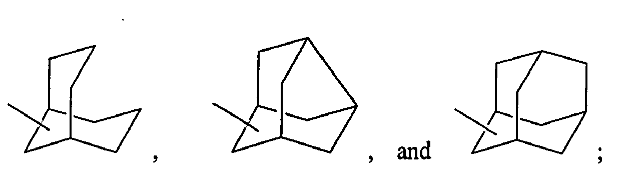

As used herein, "enhanced thermal stability" refers to a surface that maintains its integrity at greater than about 350°C.

Exemplary high surface energy groups include, but are not limited to, groups with a higher surface energy than methyl, including, but not limited to, phenyl, biphenyl, tolyl, trifluoropropyl, pentafluorophenyl, cyanopropyl, cyanoethyl, short chains of polyethylene glycol groups, as well as substituted aromatic groups (methoxy or other alkoxy-substituted aromatic groups as well as singly, or multiply cyano-substituted aromatic groups) and combinations and equivalents thereof.

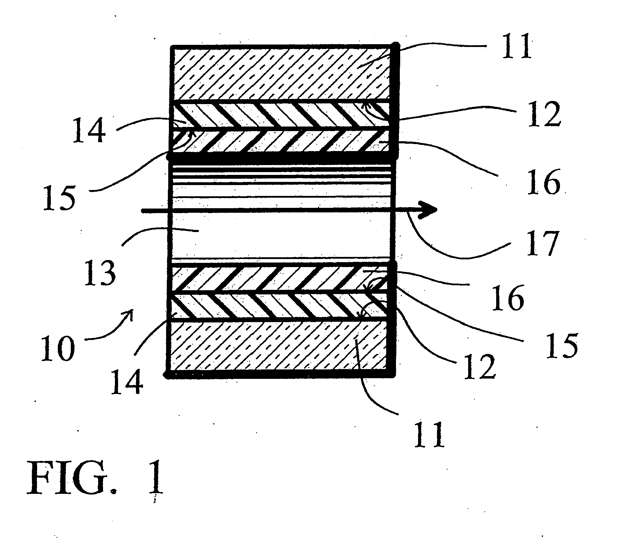

In one aspect, as shown in Figure 1, a column 10 comprises an annular wall 11, having inner surface 12 which defines an axial bore 13. In certain embodiments, wall materials include glass, fused silica or other surfaces (e.g., such as metal) comprising or coated with layers comprising reactive silanol groups.

In the chromatographic process, the analyte passes through the capillary along a path represented by arrow 17. By decreasing interactions between sample components in a mobile phase and the inner surface of a column, greater separation efficiency (e.g., increased resolution and reduced tailing) may be achieved.

In one embodiment, the invention provides deactivated surface for chromatographic separations comprising end-capped silanols as well as a polymer coating 14 which sterically blocks interactions between sample components coming into contact with the surface 15 (e.g., in a mobile phase) and residual silanol groups that have not been end-capped and are therefore still reactive. In one aspect, the polymer coating 14 comprises high surface energy-generating groups as described above.

In one aspect, coated on the deactivated polymer inner surface 15 is a layer of a chromatographically active stationary phase 16.

In one aspect, the polymer coating and polymer inner surface 15 comprises polar groups, such as terminal or pendant groups. In another aspect, the groups increase the surface energy of the deactivated polymer so that the polymer surface is wetted by a stationary phase which coats the inner surface 15.

In one embodiment, a column surface according to the invention comprises a polar capped polyalkylhydrosiloxane polymer coating, and especially the polar end capped polyalkylhydrosiloxane. In one aspect, the coating of the present invention comprises a structure as shown in FIG. 3 (showing an high surface energy-generating end cap group). In another aspect, the coating sterically hinders components in a sample from reacting with non-end capped silanols. In one aspect, the coating is smooth or uniform (e.g., at least about 95%, at least about 97%, or at least about 99% or about 100% of the surface is covered by the coating). In another aspect, the coated surface is substantially non-porous.

In another embodiment, the polymer coating further comprises functional groups capable of reacting with silanols on the column surface to end cap the silanol, e.g., forming a stable siloxane (-Si-O-Si)-Surface 12 bond, for example, as shown in Figure 3. In one aspect, reaction of the coating with the surface produces a layer of polysiloxane on the surface of the glass.

The high-surface energy-generating groups on the polysilylhydride on the column surface forms a inner coating surface 15 that has increased surface energy, allowing even a high surface energy liquid, such as a liquid comprising a polar polymer to wet and flow smoothly on the inner surface 15 of the deactivation polymer 14. Exemplary high-surface energy generating groups include but are not limited to, polar groups, hydrophilic groups, groups such as, phenyl, biphenyl, tolyl, trifluoropropyl, pentafluorophenyl, cyanopropyl, cyanoethyl, short chains of polyethylene glycol (e.g., such as tetraethylene glycol). In one aspect, the deactivating polymer comprises at least as about 50 mM m⁻¹ of such groups.

In one embodiment of this invention, the deactivating polymer coating 14 cross-links with silanols on a column surface 12 or other surface to be deactivated to inactivate the silanols and to bind the polymer to the silica surface.

Deactivated surfaces according to the invention may be coated with a polar stationary phase as is known in the art.

Mixed stationary phases may also be used.

In another embodiment, the invention also provides a method of making deactivated surfaces. In one aspect, the method comprises providing a glass, the inner surface of which is etched and acid-activated, or fused silica capillary tubes, the inner surface of which is acid-activated, by preparing a siloxane, polyalkylhydrosiloxane, having a high surface energy-generating group, and then contacting the acid-activated and/or etched surface with the siloxane comprising the high surface energy-generating group (e.g., such as a polar group) under conditions sufficient to bond the high surface energy-generating group-containing siloxane to the surface, e.g., such as at about 300°C, thereby forming a deactivating polymer-coated surface. Other suitable temperatures include between about 290 and 320°C or between 280 and 360°C. In one aspect, the polymer is capped at its terminal end with a high surface energy group. In still another aspect, after appropriate flushing and drying steps, the deactivating polymer-coated surface is then coated with a film comprising a polar liquid polymer. In still a further aspect, the deactivating polymer coating and/or the polar liquid polymer coating is substantially uniform.

When the column surface comprises glass, etching may be done as is known in the art.

Hydrochloric acid leaching (acid-activation) may be followed by passing a stream of dry nitrogen through the tube to promote drying, while heating the capillary e.g., via an oven. Hydro-acidic thermal treatment of the glass surface may be used to increase surface silanol density.

The following examples are provided to illustrate certain aspects of the invention, and are not intended to limit the scope of the invention.

### EXAMPLE 1. Method Of Synthesizing A Polyalkylhydrosiloxane Composition

To a solvent mixture consisting of 15mL of methylene chloride and 15mL of acetonitrile is added 3.00mL (2.98g) of tetramethylcyclotetrasiloxane (which will be equivalent to 77.8 mole percent methylsilylhydride content in the final polysiloxane) and 0.400 g Amberlyst 15 (resin bound sulfonic acid catalyst)(Aldrich Chemical, Milwaukee, WI, USA). This mixture is typically stirred for approximately 5 hours at room temperature.

This results in a polymethylhydrosiloxane.

Then 2.05mL (2.02g or 22.2 mole percent relative to the methylsilylhydride content) diphenyltetramethyldisiloxane is added and the mixture is stirred for an additional 12 to 16 hours. The solution is then filtered to remove the catalyst resin. The solvents are removed using a rotary evaporator and the resulting polymer is used with no further purification.

This results in a phenyldimethylsilyl end capped polymethylhydrosiloxane.

### EXAMPLE 2. Preparing a Deactivated Surface

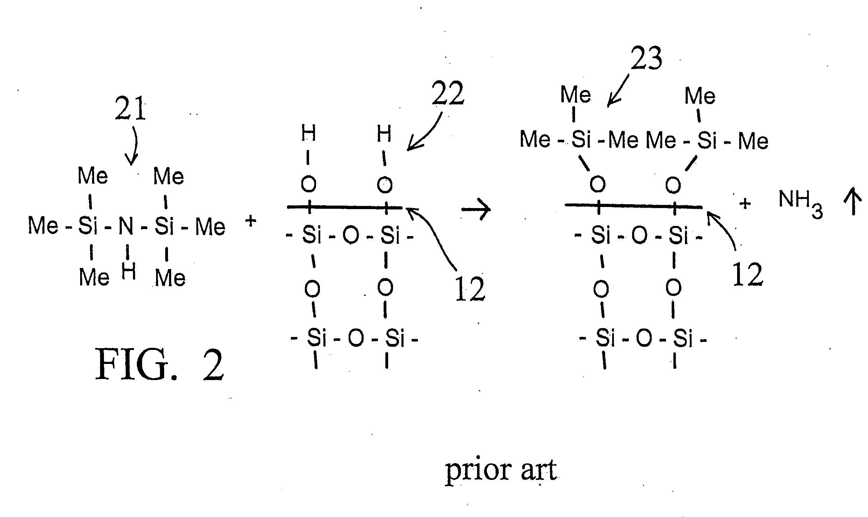

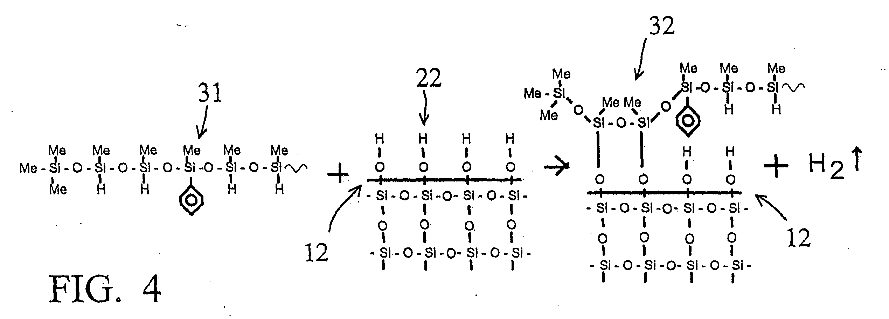

A deactivation reaction between a surface to be deactivated and a deactivation polymer is shown in FIG. 3 and FIG. 4, with FIG. 2 showing a commercially available prior art alternative "persilylation" reaction. In FIG. 2, the prior art process reacts a disilazane 21 with the silanols 22 on the surface 12 of the glass or fused silica wall. The result is the formation of trimethylsilyl capping groups 23 on the glass surface 12, and the release of ammonia.

FIG. 3 shows an example of an embodiment of this invention. Phenyldimethylsilyl end capped polymethylhydrosiloxane 26, reacts with the silanols 22 on the surface 12 of the glass or fused silica wall. The result is the formation of a phenyldimethylsilyl end capped polymethylsilyl layer 24 on the glass surface 12, and the release of hydrogen. The deactivation polymer layer 24 is stable and provides continuous coverage of the glass surface 12, and, because of the polar end caps, provides a high surface energy inner surface.

One procedure that may be used in accordance with this invention is to employ polyalkylhydrosiloxanes of the present invention for deactivation of capillaries as follows. Fused silica capillary tubing is deactivated using a 1 to 2% solution of the polyhydrosiloxane in an inert organic solvent such as pentane, hexane or toluene. A plug of this solution equal to approximately 20 to 30% of the column volume is introduced into the capillary and then pushed through at a constant rate with an inert, oxygen-free gas such as nitrogen or argon, leaving behind a film of the polyhydrosiloxane. The ends of the capillary are flame sealed and the column is heated to 300 to 320°C for about 2 to 16 hours. The polyalkylhydrosiloxane reacts with the silanols on the surface of the glass to deactivate them and to form a polysilylhydride with polar groups especially polar end groups, projecting inwardly into the bore 16 of the capillary 10. Residual polymer is then rinsed out of the column with organic solvents, typically methanol and methylene chloride. The capillary tubing is then ready for coating with the final stationary phase polymer. The deactivated capillary may be pre-cured to remove the final traces of non-bound polyhydrosiloxane before the final coating with the final stationary phase polymer. Pre-curing consists of connecting the capillary to an inert oxygen free gas source and heating to an elevated temperature- 300 to 360C, while purging with gas.

The above-described deactivation procedure may be used to provide optimum gas chromatographic properties in a column coated with a moderately polar stationary liquid phase. The polar liquid coating is applied by conventional means. The cooled and nitrogen-flushed column may be filled with a solution of the coating in a low boiling inert solvent such as benzene, pentane, methylene chloride, or acetone and then the solvent is evaporated. Stationary phase coatings of about 0.05-5.0 micron thickness may be generated.

The deactivating procedure described herein is applicable to heat-resistant glass capillary columns conventionally used in gas chromatography. This includes capillaries of borosilicate glass, soft glass, and fused silica, generally of between about 0.05-0.8 mm I.D., and from about 5-150 meters in length.

### Example 3. Method of Using a Deactivated Surface

In order to compare a capillary column comprising a deactivated surface according to the invention to a conventional commercially available disilazane deactivated capillary column (using the chemistry of FIG. 2), a test mix was run through each column. The test mix compounds are, in order of elution, 1) 2-Ethylhexanoic acid, 2) 1,6-Hexanediol, 3) 4-ChlorophenoJ1, 4) Tridecane, 5) 1-Methylnaphthalene, 6) 1-Undecanol, 7) Tetradecane, 8) Dicyclohexylamine.

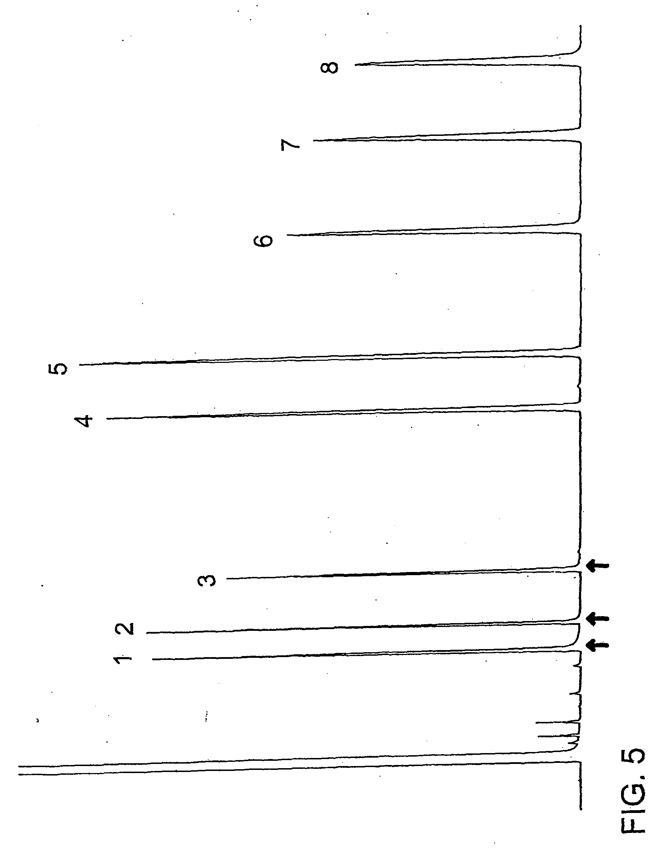

The chromatogram shown in Figure 5 illustrates the output of a typical deactivated column produced by a current commercially used production process using the chemistry of FIG. 2. Note the "tailing" (skewing of peak at near the baseline of right shoulder) of peaks number 1, 2, and 3.

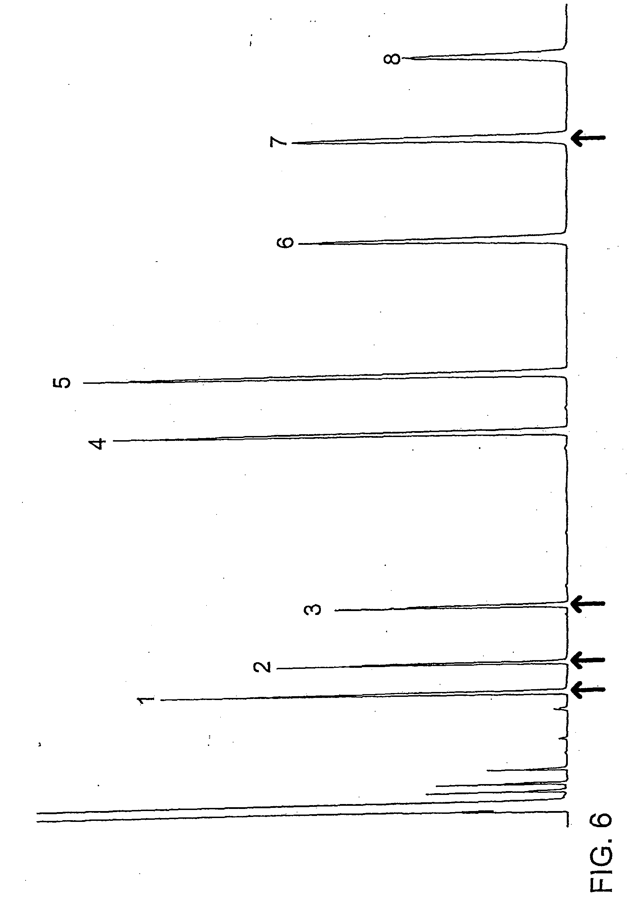

The chromatogram shown in Figure 6 illustrates the output of a deactivated column comprising a polar group end capped hydrosiloxane deactivated capillary tubing using the chemistry of FIG. 3. The same test mix was used as was used on the conventional disilazane deactivation portrayed in FIG. 5. Note the absence of any sign of tailing on any of the peaks in the chromatogram, most notably peaks 1, 2, and 3. The absence of tailing is a desirable feature.

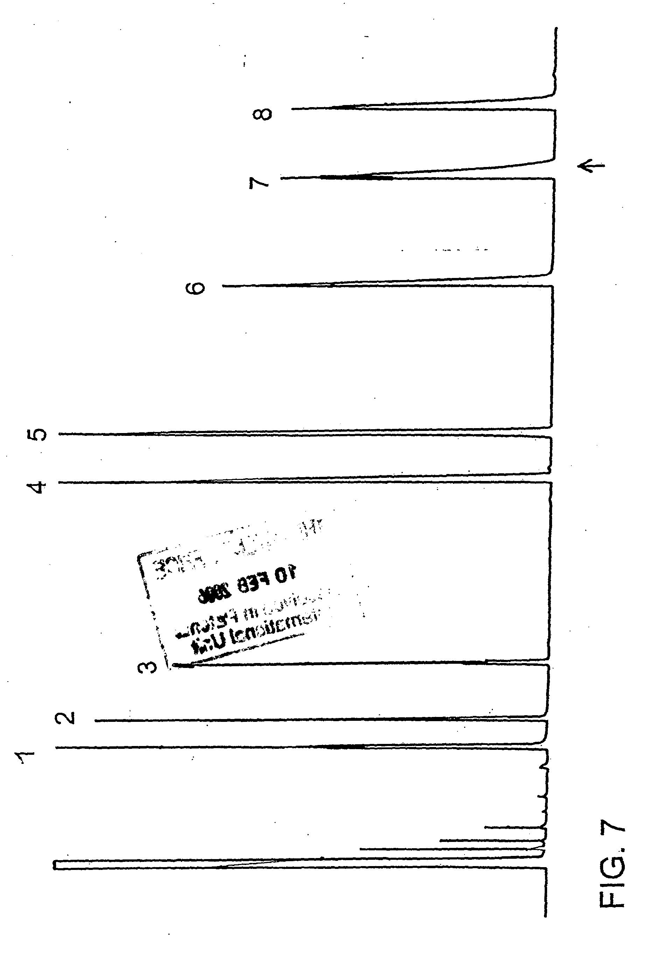

The chromatogram shown in Figure 7 illustrates the output of a deactivated column produced by a system that produces polar pendant group hydrosiloxane deactivated capillary tubing as portrayed in FIG. 4. The same test mix as used as in the other columns. There is skewing of second to the last peak (7), tetradecane, which may indicate an overload of the adsorption sites and less uniform coating of the column surface with the deactivating polymer.

All publications and patents cited in this specification are herein incorporated by reference as if each individual publication or patent were specifically and individually indicated to be incorporated by reference. The citation of any publication is for its disclosure prior to the filing date and should not be construed as an admission that the present invention is not entitled to antedate such publication by virtue of prior invention.

While the present invention has been described with reference to the specific embodiments thereof, it should be understood by those skilled in the art that various changes may be made and equivalents may be substituted without departing from the true spirit and scope of the invention. In addition, many modifications may be made to adapt a particular situation, material, composition of matter, process, process step or steps, to the objective, spirit and scope of the present invention. All such modifications are intended to be within the scope of the claims appended hereto.

The disclosures in United States patent application no. 11/054,901 from which this application claims priority, and in the abstract accompanying this application are incorporated herein by reference.

## Claims

1. A deactivated surface for use in chromatographic separations including surface material coated with a deactivating polymer layer including a polymer end-capped with high surface energy-generating groups and groups for end-capping reactive silanol groups on the surface material.

2. A deactivated surface as claimed in claim 1, wherein the surface is prepared by providing a surface material comprising reactive silanol groups, contacting the surface with a deactivating polymer end-capped with high surface energy-generating groups and including groups for end-capping the reactive silanol groups, under conditions suitable for binding the deactivating polymer to the surface material.

3. A surface as claimed in claim 1 or 2, wherein the polymer comprises a siloxane or a polyalkylhydrosiloxane.

4. A surface as claimed in claim 1, 2 or 3, wherein the surface material comprises glass or fused silica.

5. A surface as claimed in any preceding claim, wherein the high surface energy-generating groups are selected from the group consisting of: phenyl, biphenyl, tolyl, trifluoropropyl, pentafluorophenyl, cyanopropyl, cyanoethyl, short chains of polyethylene glycol groups, substituted aromatic groups and combinations thereof.

6. A surface as claimed in any preceding claim, wherein the high surface energy-generating groups comprise polar groups.

7. A device including an outer surface and an inner deactivated surface as claimed in any preceding claim.

8. A device as claimed in claim 7, wherein the inner deactivated surface defines a lumen.

9. A device as claimed in claim 8, wherein the device is configured as a capillary column.

10. A method for generating a deactivated surface for chromatographic separations, comprising:
providing a surface material comprising reactive silanol groups;
contacting the surface with a deactivating polymer end-capped with high surface energy-generating groups and groups for end-capping the reactive silanol groups under conditions suitable for binding the deactivating polymer to the surface material.

11. A method as claimed in claim 10, wherein the deactivated surface comprises the inner surface of a capillary column.

12. A method as claimed in claim 10 or 11, wherein the surface material comprises glass or fused silica.

13. A method as claimed in claim 10, 11 or 12, wherein the polymer comprises a siloxane or a polyalkylhydrosiloxane.

14. A method as claimed in any of claims 10 to 13, wherein the high surface energy generating group is selected from the group consisting of phenyl, biphenyl, tolyl, trifluoropropyl, pentafluorophenyl, cyanopropyl, cyanoethyl, short chains of polyethylene glycol groups, substituted aromatic groups and combinations thereof.

15. A method of using a deactivated surface to separate molecules in a sample, including:
providing a deactivated surface as claimed in any of claims 1 to 6 coated with a stationary phase;
flowing a sample comprising a plurality of molecules past the stationary phase-coated surface with a sample;
detecting and/or collecting molecules that have flowed past the surface.

16. A method as claimed in claim 15, wherein the deactivated surface is the inner surface of a capillary column.

17. A method as claimed in claim 15 or 16, wherein sample comprises a vapour comprising the plurality of molecules.

18. A kit comprising:
a surface material comprising silanol groups; and
a deactivating polymer comprising high surface energy-containing groups and groups capable of end-capping the silanol groups.

19. A kit as claimed in claim 18, wherein the surface material comprises glass or fused silica.

20. A kit as claimed in claim 18 or 19, wherein the surface material is the inner surface of a capillary column.

21. A kit as claimed in claim 18, 19 or 20, further comprising a composition for forming a stationary phase.

22. A system comprising a device as claimed in claim 7, 8 or 9, and a detector for detecting molecules flowing past the deactivated surface.

23. A system as claimed in claim 22, further comprising a processor for collecting data relating to the velocity of molecules flowing past the deactivated surface.

24. A system as claimed in claim 22 or 23, wherein the velocity of molecules flowing past the deactivated surface is correlated with a characteristic of the molecules.

25. A system as claimed in claim 24, wherein the characteristic relates to the chemical structure of the molecules.
